# EUROPÄISCHE PATENTANMELDUNG

(11) **EP 3 425 027 A1**
(43) Veröffentlichungstag der Anmeldung: **09.01.2019**
(21) Anmeldenummer: 18182120.8
(22) Anmeldetag: 06.07.2018
(51) Int. Cl.: C10G 47/02, B01J 21/16, C10G 11/02

(54) **KATALYSATOR ZUR VERARBEITUNG VON SCHWEREN ERDÖLRÜCKSTÄNDEN UND SEIN HERSTELLUNGSVERFAHREN**

(30) Priorität: 07.07.2017 RU 2017124321
(71) Anmelder: OOO "Kinex", 191014 Sankt Peterburg (RU)
(72) Erfinder: Koptenarmusov, Vladimir Borisovich, 187110 Kirishi, Leningradskaja oblast (RU); Katkov, Andrey Lvovich, 194291 Sankt-Peterburg (RU); Malov, Eugeniy Ivanovich, 196066 Sankt-Peterburg (RU); Pimersin, Andrey Alexeevich, 443001 Samara (RU)
(74) Vertreter: Jeck, Anton

(57) **Zusammenfassung**

Die Erfindung bezieht sich auf einen Katalysator zum thermokatalytischen Kracken von schweren Erdölrückständen wie Goudron, Masut, leichtes und schweres Gasöl sowie auch sein Herstellungsverfahren. Als eisenhaltiger Katalysator werden die zerkleinerten eisen- und manganhaltigen Konkretionen, die 4,5 - 15,0 % der Masse des Eisens, 8,0 - 28,0 % der Masse des Mangans und 7,0 - 9,0 % der Masse des Siliziums enthalten, mit einer Korngröße von 1 - 100 µm, die in der Menge von 0,001 - 1,0 % von den Massen genommen sind, verwendet. Der Katalysator wird in den Rohstoff in Form einer Suspension in liquidem Kohlenwasserstoff, der aus der die Kerosin-, Diesel- oder leichte Ölfraktion der Erdöldestillation enthaltenden Gruppe ausgewählt ist, eingelassen. Das Herstellungsverfahren des Katalysators umfasst zerkleinerte eisen- und manganhaltige Konkretionen, eine Streuung des erhaltenen Pulvers mit einem Fraktionsabzug von 1 - 100 µm, einer Wasserspülung oder Spülung mit 1 - 10%iger Salzsäurelösung und dann mit einer Spülung mit Wasser und Feuchtigkeitsentfernung bei 75 - 115 °C. Der beanspruchte Katalysator ermöglicht die Umwandlung des geringwertigen Einsatzprodukts zu Destillatmotorenöl und Masutheizöl.

## Beschreibung

Die vorliegende Erfindung bezieht sich auf die organische Chemie, nämlich auf einen Katalysator zum thermokatalytischen Kracken von schweren Erdölrückständen wie Goudron, Masut, leichtes und schweres Gasöl sowie auch auf sein Herstellungsverfahren.

Zum jetzigen Zeitpunkt unter den Bedingungen der Welttendenz zur Erhöhung des Verbrauchs an Erdölprodukten und der Abnahme der erkundeten Vorräte an leichtem Erdöl ist die Weiterentwicklung der Erdölverarbeitungsindustrie auf die Verbesserung der Produktionstiefe des Erdöls und der Erdölrückstände orientiert. Die Verarbeitung von "schwerem" Erdöl, das eine bedeutende Menge Schwerfraktionen und Rückstände enthält, mit dem Ziel, den Brennstoff nach dem klassischen Schema zu erhalten, ist nur gering rentabel und in einigen Fällen unmöglich. Die Ausarbeitungen in den letzten Jahren beziehen sich auf die Entwicklung einer innovativen Technik, die die Verarbeitung von schweren Kohlenwasserstoffen verbilligen und sie umweltfreundlicher machen kann. Zum jetzigen Zeitpunkt sind viele Verfahren der Weiterverarbeitung von Erdölnachläufen, Schwerölen und Erdölrückständen in Gegenwart von Katalysatoren beschrieben [Anchieta J., Speight J. Verarbeitung von Schwerölen und Erdölrückständen. Hydrogenisationsprozesse: Übersetzung aus dem Englischen, Sankt Petersburg: Bildungsprogrammzentrum "Beruf', 2012. - Seite 384.

So ist ein Katalysator für das Hydrokracken von schweren Erdölprodukten in der Suspensionsphase bekannt, der ein natürliches Gemisch von Hydroxiden des dreiwertigen Eisens (Limonit) darstellt [G. Okuy, M. Yasumuro, M. Tamura, T. Shigekhia, S. Yui // Erdöl- und Erdgastechnologien, 2006, Nº 5, Seite 75 - 80]. Die in diesem Prozess erhaltene Benzinfraktion wird als Rohstoff des katalytischen Reformings und schweres Gasöl als Rohstoff des katalytischen Krackens in einem Fließbett verwendet. Der Nachteil des angegebenen Katalysators und des Krackens bei seiner Anwendung ist die Tatsache, dass die Krackprodukte (Spaltprodukte) einer Verarbeitung bedürfen und dass die Anwendung einer großen Menge von Wasserstoff und/oder wasserstoffhaltigem Gas sowohl in der Grundstufe beim Hydrokracken als auch bei einer Zweistufenhydroreinigung für die Qualitätserhöhung der erhaltenen Zwischenprodukte und den Erhalt einer zusätzlichen Menge von Motorölen erforderlich ist.

Es ist auch ein Katalysator mit komplexer Zusammensetzung bekannt, der einen Zeolith mit hohem Siliciumdioxidgehalt umfasst, der mit mehrwertigen Elementen wie Ni, Al, Ce, Fe, Cr und seltenen Erden sowie hydrierbaren Grundstoffen, die aus der Ni, Co, Mo und W enthaltenden Gruppe ausgewählt sind, Füllstoffgemischen und Bindemitteln modifiziert ist, und der in Form von Granulat mit einer Größe von 800 - 1000 µm anwendbar ist. Der Katalysator in Form einer Suspension wird im Verfahren des Krackens der Schweröle (Vakuumgasöl, Masut, Goudron, Erdöl) bei 370°C verwendet, wobei 5 bis 55% von den Katalysatormassen genommen werden [RU2183503, MPK B01J29/24, 2002]. Der in der RU2183503 beschriebene Erhalt des Katalysators ist mehrstufig und energieaufwendig, aber seine Anwendung erlaubt, die Ausbeutung der Fraktionen, die bei der Aufspaltung des Erdöls und (in Gegenwart von Wasserstoff) des Druckteers bis zu 200 und 300°C kochen, signifikant zu vergrößern. Der Nachteil ist nicht nur der andauernde und energieaufwendige Aufbereitungszustand des Katalysators, sondern auch die Tatsache, dass der Katalysator aufwendige Metalle (Mo, Co, W, Seltenerdmetalle) enthält, was den Krackvorgang im Ganzen signifikant verteuert und eine hohe Katalysatorkonzentration beim Kracken die Verwendung des mit harten Einschlüssen gesättigten Krackrückstands erschwert oder unmöglich macht.

Dem vorliegenden Katalysator am nächsten kommt ein Katalysator, der die magnetischen Fraktionen von Mikrosphären der Thermoelektrozentralensole, die 40,0 - 95,0% der Masse von Dieisentrioxid (III) mit einem Mikrosphärendurchmesser von 0,01 - 0,60 mm enthält, und die bei 600 - 800°C kalziniert sind, darstellt. Der angegebene Katalysator wird bei der Verarbeitung von Schweröl durch die Einbringung von 3 - 20% der Masse des Katalysators in diesem Erdöl mit nachfolgendem Thermokracken bei 400 - 500°C [RU2375410, MPK C10G11/04, 2009] angewendet. Das Thermokracken unter Verwendung des angegebenen Katalysators ermöglicht es, 65% der Masse der Benzinfraktion bei einer Gesamtausbeute von Destillatfraktionen bis zu 83% der Masse zu erhalten. Ein Nachteil des bekannten Katalysators besteht darin, dass er in großer Menge (von 3 - 20% der Masse) verwendet werden soll. Dies kann bei der Abtrennung des Katalysators von den Erdölprodukten Probleme bereiten und ihre Qualität durch die Erhöhung des Aschenwerts des Rückstandsöls verschlechtern. Eine hohe Ausbeute der Benzinfraktion bei Nichtvorliegen von Wasserstoff im Reaktionsgemisch zeugt von einem ungesättigten Charakter der anfallenden Fraktionen. Der hohe Anteil an Olefinen, Dienen und anderen ungesättigten Verbindungen in der Benzinfraktion erlaubt nicht, sie unmittelbar für katalytisches Reforming zu verwenden. Zudem kann das Rückstandsöl (Goudron), das 3 - 20% der Masse des Katalysators enthält, ohne einen zusätzlichen Reinigungsvorgang nicht verwendet werden.

Das technische Ergebnis, auf dessen Erreichung die vorliegende Erfindung gerichtet ist, besteht in der Gewinnung eines Katalysators zur Umwandlung des geringwertigen Einsatzprodukts in Destillatmotorenöl und Masutheizöl.

Das angegebene technische Ergebnis wird dadurch erreicht, dass die zerkleinerten eisen- und manganhaltigen Konkretionen, die 4,5 - 15% Eisen, 8,0 - 28,0% Mangan und 7,0 - 9,0% Silizium enthalten und die in einer Menge von 0,001 - 1,0% der Masse genommen sind, als eisenhaltiger Katalysator verwendet werden.

Die zerkleinerten Konkretionen haben eine Korngröße von 1 - 100 µm.

Der Katalysator wird in den Rohstoff in Form einer Suspension in flüssigem Kohlenwasserstoff, der aus der die Kerosin-, Diesel- oder leichte Ölfraktion der Erdöldestillation enthaltenen Gruppe ausgewählt ist, eingelassen.

Das oben genannte technische Ergebnis wird auch durch ein Herstellungsverfahren des angegebenen Katalysators durch die Zerkleinerung von eisen- und manganhaltigen Konkretionen, Streuung des erhaltenen Pulvers mit dem Fraktionsabzug von 1 - 100 µm, Wasserspülung oder Spülung mit 1 - 10% iger Salzsäurelösung und dann mit Wasser und Feuchtigkeitsentfernung bei 75 - 115°C erreicht.

Der Katalysatorherstellungsvorgang wird wie folgt durchgeführt.

Die eisen- und manganhaltigen Konkretionen werden mittels einer mechanischen Mühle feinzerkleinert, gestreut und mit Wasser oder mit 1 - 10% iger Salzsäurelösung gespült, danach mit Wasser gespült und bei 75 - 115°C getrocknet. Aus den zur Verwendung als Katalysator ausgewählten Fraktionen mit angegebener Dispersität im Bereich von 1 - 100 µm wird die Suspension in einer Kerosin-, Diesel- oder leichten Ölfraktion der Erdöldestillation vorbereitet.

Für die Effektivitätsbestätigung des vorliegenden Katalysators werden Beispiele für seine Anwendung beim Kracken von schweren Erdölrückständen angegeben.

Als Rohstoff können Goudron, Masut, leichtes oder schweres Vakuumgasöl verwendet werden.

Das Kracken erfolgt bei einer Temperatur oberhalb von 370°C, und zwar bei einer Temperatur von 400 - 500°C. Die Kontaktzeit des Rohstoffs und des Katalysators beträgt üblicherweise 10 - 60 Minuten.

Der Prozess wird entweder in einer Umgebung von Inertgas (Stickstoffgas) oder in einer Umgebung von Rauchgasen (CO₂) oder in einer Wasserstoffumgebung oder in einem wasserstoffhaltigen Gas unter Beimischung von Kohlenwasserstoffen wie Methan, Ethan und Propan bei einem Druck von 0,5 - 6,0 MPa durchgeführt.

Im Versuch wurde das Verfahren in einem Chargen-Autoklaven durchgeführt. Als Rohstoff wurde ein schweres Vakuumgasöl (SVG) verwendet. Die Charakteristik des Rohstoffs ist in der Tabelle 1 angegeben.

**Tabelle 1**

| Rohstoff: schweres Vakuumgasöl (SVG) | |
|---|---|
| Schwefelgehalt, % von den Massen | 1,70 |
| Gehalt von den PAK*, % der Massen | 8,27 |
| Stickstoffgehalt, ppm | 813 |
| Dichte, kg/m3 | 900 |
| Gehalt von bis 360°C kochenden Fraktionen, % | 20 |

### • PAK- polyzyklo -aromatische Kohlenwasserstoffe

Die Krackprodukte wurden gemäß den folgenden normativen Unterlagen untersucht:
- staatliche Standardnorm 2177-99. Erdölprodukte. Bestimmungsmethoden der Destillationsanalyse.
- staatliche Standardnorm 2072-82. Leichterdölprodukte. Bestimmungsmethode der Jodzahlen und Ethylen-Kohlenwasserstoffgehalt.
- staatliche Standardnorm 10585 - 99. Erdölbrennstoff. Masut. Technische Vorschriften.

Die Ergebnisse der Verfahrensdurchführung unter verschiedenen Bedingungen und die Eigenschaften der erhaltenen Produkte sind in Tabelle 2 angegeben.

### Beispiel 1

0,001 % der Masse der zerkleinerten eisen- und manganhaltigen Konkretionen, die 28,0 % Mn, 4,5 % Fe, 8,0 % Si mit einer Korngröße von 1 - 50 µm in Form einer Suspension in der Leuchtpetrolfraktion enthält, werden in den Rohstoff eingelassen. Der zerkleinerte Katalysator wurde einer Wasserspülung und einer Thermobehandlung (Feuchtigkeitsentfernung) bei einer Temperatur von 75°C unterzogen.

Das katalytische Spaltverfahren wird bei einer Temperatur von 400°C in einer Umgebung von Inertgas (Stickgas) bei einem Druck von 0,5 MPa durchgeführt. Die Kontaktzeit des Rohstoffs und des Katalysators beträgt 10 Minuten.

Die Bedingungen zur Durchführung des Experiments und die Eigenschaften der erhaltenen Produkte sind in Tabelle 2 angegeben.

### Beispiel 2

0,05 % der Masse der zerkleinerten eisen- und manganhaltigen Konkretionen, die 16,0 % Mn; 10,0 % Fe; Si 7,0 % Si mit einer Korngröße von 50 - 100 µm in Form einer Suspension in der Dieselfraktion enthält, werden in den Rohstoff eingelassen. Der zerkleinerte Katalysator wurde mit Wasser gespült und bei einer Temperatur von 90°C getrocknet.

Das katalytische Spaltverfahren wird bei einer Temperatur von 450°C in einer CO₂-Umgebung bei einem Druck von 1,5 MPa durchgeführt. Die Kontaktzeit des Rohstoffs und des Katalysators beträgt 30 Minuten.

Die Bedingungen zur Durchführung des Experiments und die Eigenschaften der erhaltenen Produkte sind in Tabelle 2 angegeben.

### Beispiel 3

1% der Masse der zerkleinerten eisen- und manganhaltigen Konkretionen, die 8,0 % Mn; 15,0 % Fe; 9,0 % Si mit einer Korngröße von 30 - 80 µm in Form einer Suspension in der Leichtölfraktion enthält, werden in den Rohstoff eingelassen. Der zerkleinerte Katalysator wurde mit Wasser gespült und bei einer Temperatur von 115°C getrocknet. Das katalytische Spaltverfahren wird bei einer Temperatur von 500°C in einer Wasserstoffumgebung bei einem Druck von 6,0 MPa durchgeführt. Die Kontaktzeit des Rohstoffs und des Katalysators beträgt 60 Minuten.

Die Bedingungen zur Durchführung des Experiments und die Eigenschaften der erhaltenen Produkte sind in Tabelle 2 angegeben.

### Beispiel 4

0,5 % der Masse der zerkleinerten eisen- und manganhaltigen Konkretionen, die 16,0 % Mn; 15,0 % Fe; 9,0 % Si mit einer Korngröße von 30 - 80 µm in Form einer Suspension in der Leichtölfraktion enthält, werden in den Rohstoff eingelassen. Der zerkleinerte Katalysator wurde mit 10%iger Salzsäurelösung, danach mit Wasser bis zur neutralen Reaktion des Spülwassers gespült und bei einer Temperatur von 75 °C getrocknet.

Das katalytische Spaltverfahren wird bei einer Temperatur von 500 °C in einer Stickstoffumgebung bei einem Druck von 3,0 MPa durchgeführt. Die Kontaktzeit des Rohstoffs und des Katalysators beträgt 60 Minuten.

Die Bedingungen zur Durchführung des Experiments und die Eigenschaften der erhaltenen Produkte sind in Tabelle 2 angegeben.

### Beispiel 5

0,05 % der Masse der zerkleinerten eisen- und manganhaltigen Konkretionen, die 16,0 % Mn; 15,0 % Fe; 9,0 % Si mit einer Korngröße von 30 - 80 µm in Form einer Suspension in der Leichtölfraktion enthält, werden in den Rohstoff eingelassen. Der zerkleinerte Katalysator wurde mit 8%iger Salzsäurelösung, danach mit Wasser bis zur neutralen Reaktion des Spülwassers gespült und bei einer Temperatur von 100°C getrocknet.

Das katalytische Spaltverfahren wird bei einer Temperatur von 500°C in einer Stickstoffumgebung bei einem Druck von 3,0 MPa durchgeführt. Die Kontaktzeit des Rohstoffs und des Katalysators beträgt 60 Minuten.

Die Bedingungen zur Durchführung des Experiments und die Eigenschaften der erhaltenen Produkte sind in Tabelle 2 angegeben.

### Beispiel 6

0,05 % der Masse der zerkleinerten eisen- und manganhaltigen Konkretionen, die 16,0 % Mn; 15,0 % Fe; 9,0 % Si mit einer Korngröße von 30 - 80 µm in Form einer Suspension in der Leichtölfraktion enthält, werden in den Rohstoff eingelassen. Der zerkleinerte Katalysator wurde mit 1%iger Salzsäurelösung, danach mit Wasser bis zur neutralen Reaktion des Spülwassers gespült und bei einer Temperatur von 115 °C getrocknet.

Das katalytische Spaltverfahren wird bei einer Temperatur von 500 °C in einer Propanumgebung bei einem Druck von 3,0 MPa durchgeführt. Die Kontaktzeit des Rohstoffs und des Katalysators beträgt 60 Minuten.

Die Bedingungen zur Durchführung des Experiments und die Eigenschaften der erhaltenen Produkte sind in Tabelle 2 angegeben.

### Beispiel 7

1 % der Masse der zerkleinerten eisen- und manganhaltigen Konkretionen, die 16,0 % Mn; 15,0 % Fe; 9,0 % Si mit einer Korngröße von 1 - 10 µm in Form einer Suspension in der Kerosinfraktion enthält, werden in den Rohstoff eingelassen. Der zerkleinerte Katalysator wurde mit 10%iger Salzsäurelösung, dann mit Wasser bis zur neutralen Reaktion des Spülwassers gespült und bei einer Temperatur von 115 °C getrocknet.

Das katalytische Spaltverfahren wird bei einer Temperatur von 500 °C in einer Wasserstoffumgebung bei einem Druck von 6,0 MPa durchgeführt. Die Kontaktzeit des Rohstoffs und des Katalysators beträgt 60 Minuten.

Die Bedingungen zur Durchführung des Experiments und die Eigenschaften der erhaltenen Produkte sind in Tabelle 2 angegeben.

Wie aus den vorherigen Angaben folgt, hat der beanspruchte Katalysator eine ausreichende Aktivität im katalytischen thermischen Krackverfahren von schweren Kohlenwasserstofffraktionen und "reagiert" angemessen auf die vorgenommenen Änderungen der Parameter der technologischen Vorschriften.

Der Katalysatorverbrauch ist, bezogen auf einen verarbeiteten Rohstoff, sehr gering, und der Katalysator behält seine Aktivität in dem beanspruchten Konzentrationsbereich.

Das Verfahren ermöglicht es, die Konversion zu regulieren und das Verhältnis der resultierenden Krackweißprodukte zu ändern, die dann einer Hydroreinigung unterzogen werden können, um einen gesamten Bereich von Motorkraftstoffen zu erhalten.

Die Tieftemperatur der Rückstandsölerkaltung (siehe Tabelle 2), der geringe Aschegehalt, der durch die geringe Konzentration des fein zerteilten Katalysators bedingt ist, erlaubt es, das beim Kracken mit dem beanspruchten Katalysator erhaltene Rückstandsöl als Masutheizöl ohne weitere Verarbeitung zu verwenden.

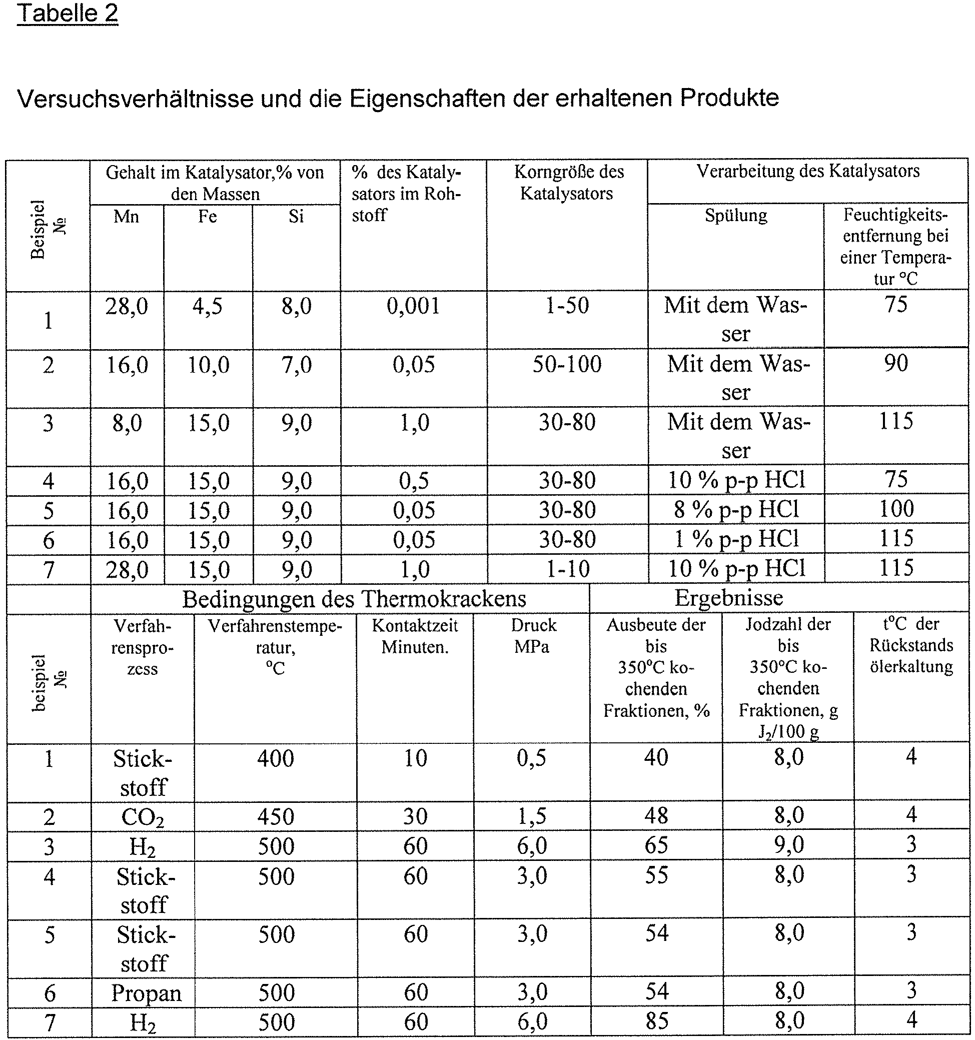

## Patentansprüche

1. Katalysator zur Verarbeitung von schweren Erdölrückständen,
**dadurch gekennzeichnet,**
**dass** zerkleinerte eisen- und manganhaltige Konkretionen verwendet werden, die 4,5 - 15,0 % der Masse von Eisen, 8,0 - 28,0 % der Masse von Mangan und 7,0 - 9,0 % der Masse von Silizium enthalten, die in einer Menge von 0,001 - 1,0 % der Masse genommen sind.

2. Katalysator nach Anspruch 1,
**dadurch gekennzeichnet,**
**dass** die Kerngröße des Katalysators 1 - 100 µm beträgt.

3. Katalysator nach Anspruch 1 oder 2,
**dadurch gekennzeichnet,**
**dass** er eine Suspension in liquidem Kohlenwasserstoff darstellt.

4. Katalysator nach Anspruch 3,
**dadurch gekennzeichnet,**
**dass** der liquide Kohlenwasserstoff aus der die Kerosin-, Diesel- oder leichte Ölfraktion der Erdöldestillation enthaltenden Gruppe ausgewählt ist.

5. Herstellungsverfahren des Katalysators nach Anspruch 1,
**dadurch gekennzeichnet,**
**dass** eisen- und manganhaltige Konkretionen zerkleinert und gestreut werden, dass eine Wasserspülung oder Spülung mit 1 - 10% iger Salzsäurelösung und dann eine Spülung mit Wasser sowie eine Feuchtigkeitsentfernung bei 75 - 115 °C erfolgen.

6. Verfahren nach Anspruch 5,
**dadurch gekennzeichnet,**
**dass** zusätzlich ein Fraktionsabzug des Katalysators mit angegebener Dispersität im Bereich von 1 - 100 µm erfolgt.

7. Verfahren nach Anspruch 5 oder 6,
**dadurch gekennzeichnet,**
**dass** zusätzlich das Suspendieren des Katalysators in liquidem Kohlenwasserstoff erfolgt.

8. Verfahren nach Anspruch 7,
**dadurch gekennzeichnet,**
**dass** der liquide Kohlenwasserstoff aus der die Kerosin-, Diesel- oder leichte Ölfraktion der Erdöldestillation enthaltenden Gruppe ausgewählt ist.
